# EUROPEAN PATENT SPECIFICATION

(11) **EP 2 200 452 B1**
(45) Date of publication and mention of the grant of the patent: **20.06.2012**
(21) Application number: 08830639.4
(22) Date of filing: 12.09.2008
(51) Int. Cl.: A23L 1/0526, A23L 1/0532, A23L 1/305

(54) **SUPER DISPERSIBLE GUMS AND POWDERS AND PROCESS FOR MAKING THE SAME**
LEICHT DISPERGIERBARE GUMMEN UND PULVER, UND VERFAHREN ZU IHRER HERSTELLUNG
GOMMES ET POUDRES HAUTEMENT DISPERSIBLES ET PROCÉDÉ POUR LEUR PRÉPARATION

(30) Priority: 14.09.2007 US 972573 P
(43) Date of publication of application: 30.06.2010
(73) Proprietor: Tic Gums, Inc., Belcamp, MD 21017 (US)
(72) Inventor: NIETO, Marceliano, Abingdon Maryland 21009 (US)
(74) Representative: Long, Giorgio
(86) International application number: PCT/US2008/076203
(87) International publication number: WO 2009/036294

(56) References cited:
- EP-A- 0 549 327
- US-A- 2 992 188
- US-A- 3 455 714
- US-A- 4 021 582

## Description

### CROSS REFERENCE TO RELATED APPLICATIONS

This application claims priority to United States Provisional Application No. 60/972,573, filed on September 14, 2007.

### BACKGROUND OF THE INTENTION

### 1. Field of the Invention

The disclosure relates generally to producing super dispersible gums, starches, powder ingredients, and blends thereof, that disperse readily in water using spoon mixing or under low shear of around 400 RPM as well as, the process for making the same. These poorly-dispersing or low dispersible substrates include xanthan gum, various cellulose derivatives, various seed gums, carrageenans, pectin, various alginates, gum Arabic and other tree exudates, larch gum, konjac, blends of gums, various instant starches, gum-starch blends and other powder ingredients that suffer the same dispersion and clumping problems, such as, soy protein, egg solids, non-fat dry milk, certain flours, cocoa and others.

Many techniques to improve dispersion of gums, instant starches and hard-to- disperse powders have been developed, such as, batch and continuous agglomeration with water and wet granulation. However, straight agglomeration or granulation with water only works with a few non-viscous gums, such as, gum arabic, inulin, larch, etc. All cold water soluble and viscous gums, starches, protein powders and blends thereof, still clump up badly when they are dissolved in water at normal mixing conditions or when the end users put the powder mix containing these gums in water with spoon mixing. Various wetting agents and surfactants as disclosed in the patents below have been tried to improve gum dispersion. Hydrophilic sprays of, for example, glycols, sugar alcohols, and cold water soluble gums, such as, gum Arabic, have been used to create what was accepted as "readily dispersible" agglomerates. However, these techniques work only with non-viscous gums that by nature are much easier to disperse or dissolve in water. When viscous gums are added to water, they start building viscosity immediately during addition which makes it extremely difficult to disperse the retaining, un-added material without creating lumps. When non-viscous gums are being added, the water remains thin until all of the material is wetted and mixed in the water.

There have been attempts in the past to improve dispersion of gums in water; however, while significant improvements in powder dispersion have been observed, the current techniques leave significant room for improvement.

The present disclosure includes, in one embodiment, spraying a crosslinkable alginate solution or a solution of any crosslinkable anionic sugar acid monomer, followed by spraying a solution of a calcium salt to induce polymerization and forming an insoluble, thin hydrogel coat of crosslinked calcium-alginate gel on the surface of the agglomerates or granulates; which delays swelling of the particles for ease of dispersion in water. In another embodiment, a surface coating with pre-activated cold-water insoluble or slow swelling gum, cook up starch, or a combination thereof, is used to achieve the same effect.

None of the previous attempts to improve dispersion have been based on this principle or disclose a similar process to make super dispersible gums, instant starches, powders, and blends thereof The disclosed super dispersible gums and powders will disperse with spoon mixing or under low shear of around 400 RPM and will not leave the finished product with an off taste or oil-soluble residual.

### BRIEF DESCRIPTION OF THE DRAWING

The accompanying drawings, which are included to provide a further understanding of the disclosure and are incorporated in and constitute a part of this specification, illustrate embodiments of the disclosure and together with the description serve to explain the principles of the disclosure. In the drawings:

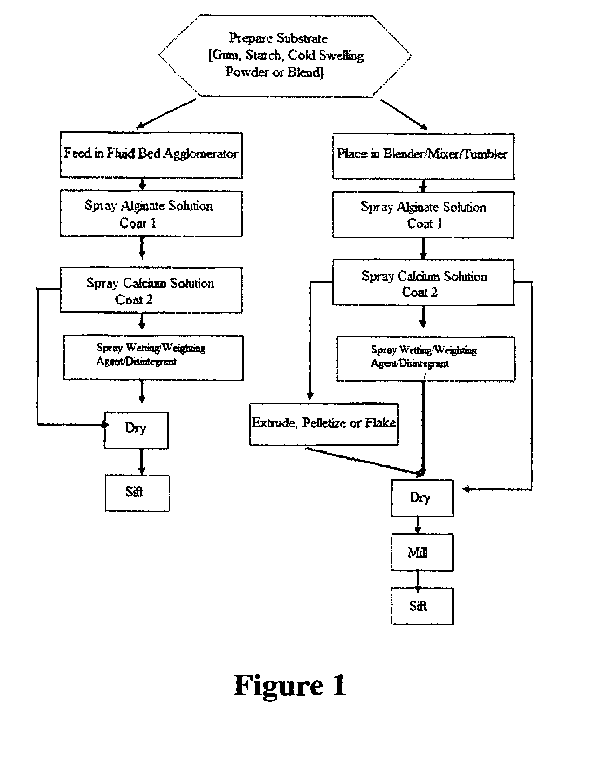

Figure 1 illustrates a functional block diagram of the steps of a process flow chart for preparing super dispersible gums, starches, powder ingredients, and blends thereof, using an alginate-calcium hydrogel crosslinked coat (or any sugar acid polymer-divalent ion crosslinkable monomer) to create an insoluble surface coating on the finished agglomerates or granulates.

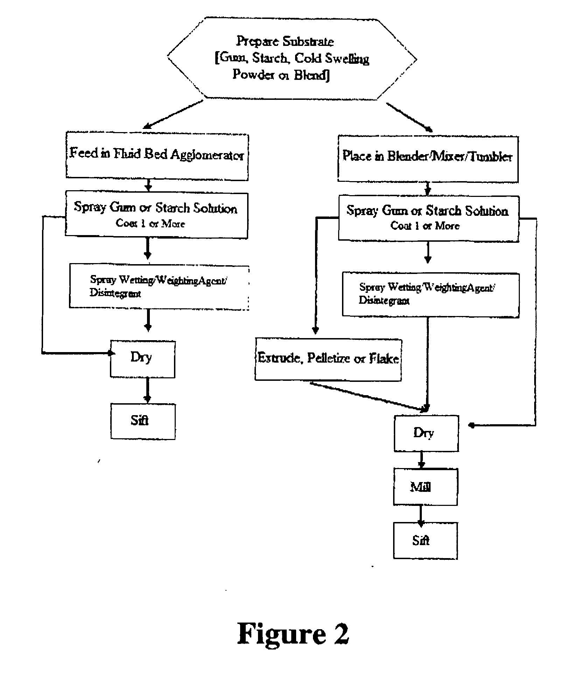

Figure 2 illustrates a functional block diagram of the steps of a process flow chart for preparing super dispersible gums, starches, powder ingredients, and blends thereof, using a cold water insoluble or slow swelling hydrocolloid coat-agglomeration spray in single or multiple dosing without the use of a crosslinking salt.

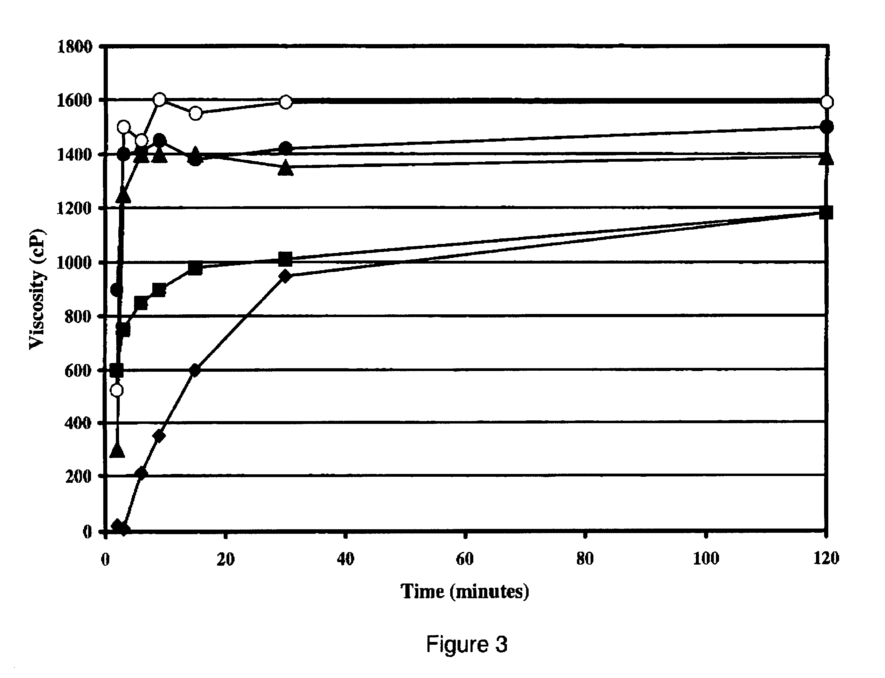

Figure 3 illustrates the dispersion and hydration of xanthan raw (a hard-to-disperse, clump-prone powder) and standard agglomerated xanthan as compared to super dispersible xanthan produced using the three embodiments of the present disclosure. [◆ - xanthan as is Control, ■ - Std. Agglomerated Control, ▲ - Locust Bean Gum Coasted, ● - Cook-up Starch Coated, ○ - Alginate-Calcium Coated]

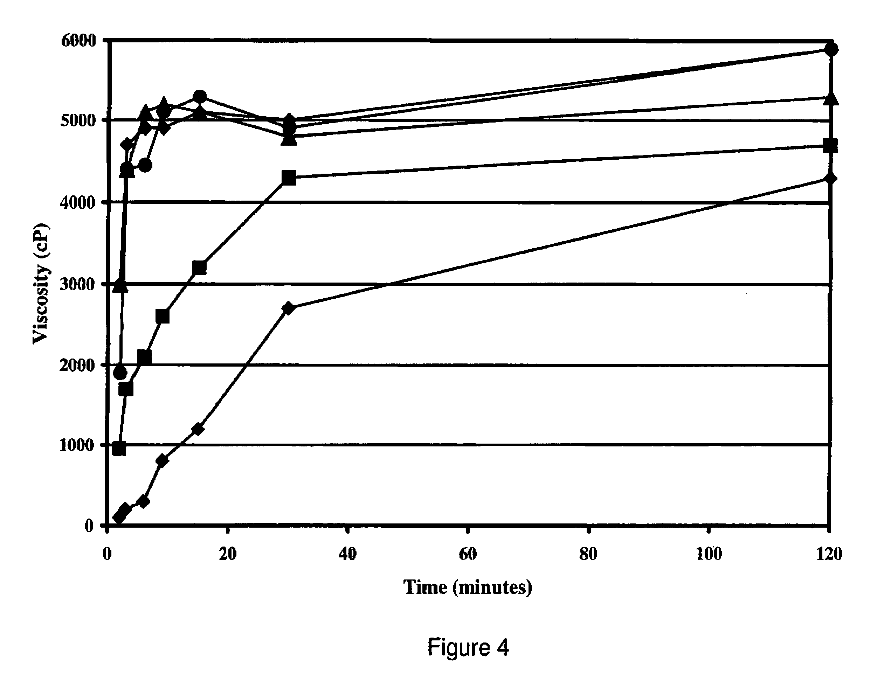

Figure 4 illustrates the dispersion and hydration of CMC raw (a high viscosity gum and clump-prone substrate) and the standard agglomerated CMC as compared to super dispersible CMC produced using the three embodiments of the present disclosure. [◆ - CMC as is Control, ■ - Std. Agglomerated Control, ▲ - Locust Bean Gum Coasted, ● -Alginate-Calcium Coated]

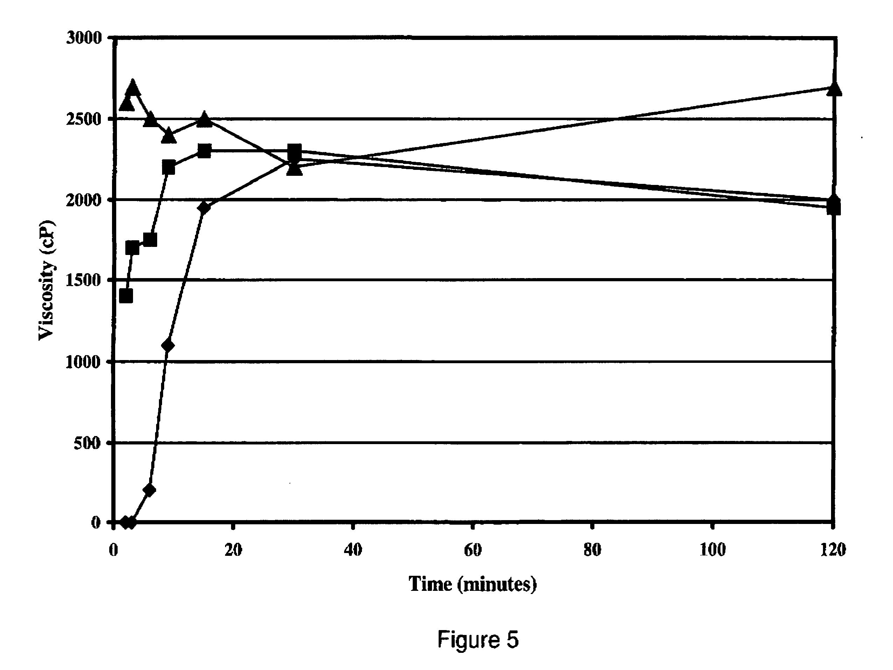

Figure 5 illustrates the improvement in dispersion of a fluffy substrate when a weighting agent, such as, calcium chloride is used with a cook-up starch coat vs. a cook-starch coat alone and HV xanthan raw. [◆ - HV xanthan raw, ■ - Cook-up Stanch Coated Std., ▲ - Cook-up Starch & Calcium Chloride Coated]

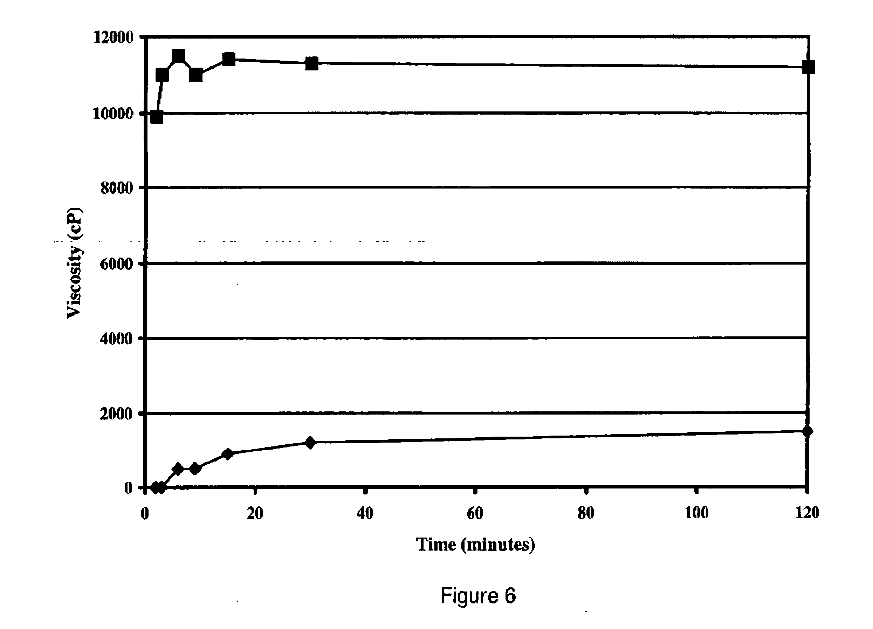

Figure 6 illustrates the synergy between cook-up starch coat and xanthan as shown by around a ten-fold increase in viscosity compared to the standard xanthan raw material. [◆ - standard xanthan raw, ■ - Coated xanthan]

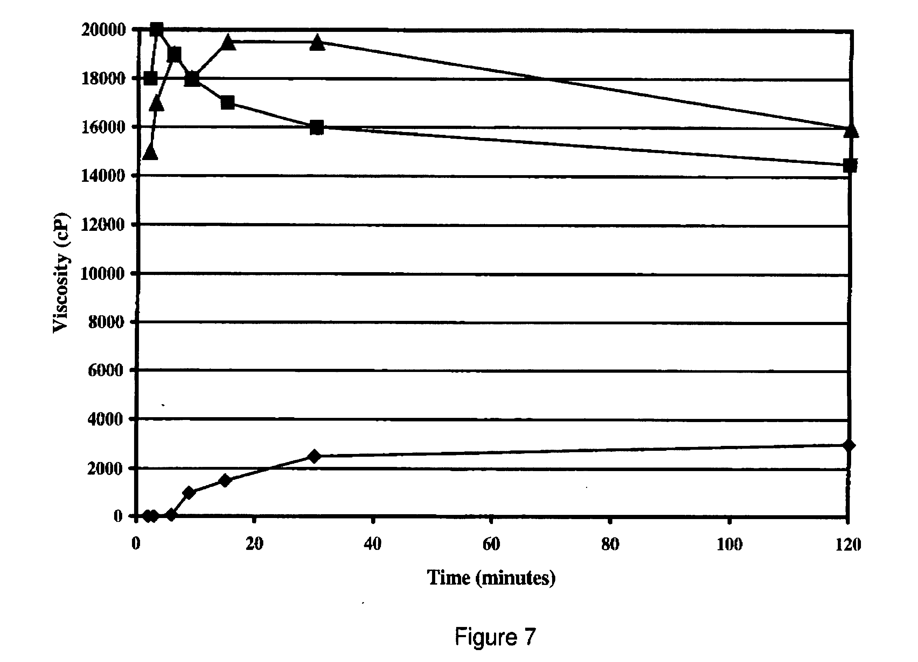

Figure 7 illustrates the synergy between a cook-up starch coat and high viscosity xanthan as shown by around a ten-fold increase in viscosity compared to the standard xanthan raw material. [◆ - HV xanthan raw, ■ - Coated with Starch; Trial 2, ▲ - Coated with Starch; Trial 1]

### SUMMARY OF THE INVENTION

The disclosure relates generally to producing super dispersible gums, starches, powder ingredients, and blends thereof, that disperse readily in water with spoon mixing or under low shear of around 400 RPM, as well as, a process for making the same.

Viscous anionic hydrocolloids, such as, xanthan, CMC, alginate, carrageenans, and pectins; viscous non-ionic gums, such as, konjac, guar, fenugreek, tara gum, hydroxypropylcellulose, methylcellulose, HPMC; and other similar materials all swell too rapidly in water and tend to clump up when added to water under normal mixing conditions. Additionally, instant starches used for thickening soups, sauces, gravies, and dips; and cocoa and protein ingredients, such as, soy isolate and milk protein isolates tend to form lumps when added to water or the liquid portion of a batch, and their dispersion problems become worse when they are blended with the gums. When these materials are used in most manufacturing processes a special high-shear mixer or an eductor/disperser is needed to dissolve these ingredients without lumping. However, the tradeoff is an excessive entrainment of air, which requires additional steps and time to remove. Even low viscosity gums tend to clump up during the dissolution process if preparing a stock solution at high concentrations. This problem is exacerbated using high viscosity gums and instant starches because of the compounding effect of instantaneous swelling of the particles upon contact with water resulting in the formation of "fish eyes" or gum lumps. Standard agglomeration with water creates interstitial voids that help in dispersion and hydration; however, this seems to work only with low viscosity gums at low and non-viscous concentrations.

Coating and agglomeration techniques using surfactants and wetting agents with a wide range of HLB (hydrophilic and lipophilic balance) have been tried with "hard-to-disperse" gums. The techniques improved dispersion of viscous, fast-swelling gums only to a certain extent; however, it was not possible to spoon-mix these products without forming lumps. Many wetting agents and surfactants also change the clarity of the gum solution, which is critical in many end uses for the clear gums. Additionally, others impart an off taste or are insoluble and float in water, which discourages their use.

The present disclosure includes two distinct processes for producing super dispersible gums, starches, powder ingredients, and blends thereof, using surface coating and agglomeration/granulation technique with either 1) a crosslinked hydrogel coat, or 2) an insoluble, slow-swelling coat of hydrocolloid.

In the first embodiment, the crosslinked hydrogel coat is created by spraying an alginate solution (or a solution of any sugar acid polymer) over the substrate, which is then followed by a calcium spray (or any divalent ion that induces crosslinking).

In the second embodiment, the coat of a slow-swelling hydrocolloid is created by first activating and hydrating a cold-water insoluble gum, such as, agar, locust bean gum, kappa-carrageenan, gellan, cook-up starches, or slow swelling gums, such as, guar gum, tara gum and others, and spraying it on the substrate in single or multiple dose.

When the coated substrate is dried, the coating produced in either embodiment delays the swelling of low dispersible substrates causing the particles to sink, wet and disperse without lumping even on low shear. In short, the present disclosure will produce super dispersible gums, starches, powder ingredients, and blends thereof, by coating the substrate with a thin layer of an insoluble or slow swelling hydrogel crosslinked gum or with another hydrocolloid that meets the swelling criteria. The materials to be coated or used as substrate include xanthan gum, various cellulose derivatives, various seed gums, carrageenans, pectin, various alginates, gum Arabic and other tree exudates, larch gum, konjac, blends of gums, various instant starches, gum-starch blends and other powder ingredients that suffer the same dispersibility problems, such as, soy protein, egg solids, non-fat dry milk, flour, cocoa and others.

The disclosure includes:

In a first embodiment, the coating process is achieved by using two spray coatings, such as, an alginate solution spray and calcium solution spray to form a crosslinked calcium-alginate hydrogel. The calcium-alginate coat on the surface of the particle modifies the swelling behavior of the coated particles and causes delay in the swelling of the agglomerated product making the particles disperse in water with minimal shear. The delay in the swelling could be a few seconds to 10 - 15 minutes depending the dose of the spray coats. Alternatively, a spray solution of pectic acid, very low methoxy pectin or any sugar acid polymer, in place of the alginate, and any divalent ion, in place of Ca²⁺, for crosslinking may be used in this process. This coating process can be done in a fluid bed agglomerator, either in a continuous or batch mode; fluidized spray dryer; or any wet granulation or pelletizing machine that is suitable for spraying and mixing powder material.

The process includes:

**Step 100.** In step 100, the gum substrate or blend to be agglomerated is fed into a mixing, agglomerating or granulating unit, and while the powder is being fluidized or mixed it is sprayed with a dilute solution of sodium alginate or another sugar acid polymer ranging, preferably, from approximately 0.1% to approximately 10% by weight in water. The amount of alginate spray or sugar acid polymer spray varies for each substrate used.

**Step 200.** In step 200, a second coat of a solution of a calcium salt is sprayed to react the alginate with the calcium ions to form an insoluble calcium-alginate hydrogel. Cross linking salts include, for example, calcium chloride, calcium lactate, calcium acetate and other suitable calcium salts ranging in concentration preferably from, approximately 0.1 to approximately 10%. Alternatively, any divalent salt, such as, a magnesium salt can be used. In this embodiment, step 100 and step 200 may be interchanged to achieve the same effect. The dose of the crosslinked hydrogel coating may be modified to achieve synergy between the coat and the substrate, wherein synergy is defined as increased viscosity, stability or process tolerance of the coated product in water or in the end application.

**Step 300.** In step 300, as applicable for fluffy and light substrates, a finishing spray of: a wetting agent, such as, lecithin/glycerin, sugar alcohols; weighting agents comprising of solution of calcium salts, magnesium salts, sodium salts, potassium salts; disintegrant, such as, cellulose powder, MCC, croscarmellose sodium, starch glycolate; or a mixture thereof; is applied to make the coated particles sink faster and disintegrate more readily.

**Step 400.** In step 400, the coated product is dried to the moisture specification of the substrate in the same fluid bed unit or in a separate drying unit, such as, a tunnel dryer, drum dryer or other suitable drying equipment. If applicable, the sprayed material may be extruded and pelletized or flaked first prior to drying.

**Step 500.** In step 500, the dried coated substrate is sifted and/or milled to the desired particle size distribution depending on the substrate.

In the second embodiment, the coating process is achieved using a single or multiple sprays of a dilute hydrocolloid solution, such as, agar, locust bean gum, gellan gum, cook up starch and other cold-water insoluble or slow-swelling polysaccharides, such as, guar gum, tara gum, or a combination thereof, without crosslinking. The requirement for insoluble or slow-swelling hydrocolloids for use in the second embodiment is based on the principle that, when these polymers are activated and used as a coating, they revert to their cold-water insoluble state or slow-swelling state upon drying. On the surface of the substrate, the coat delays the swelling of "hard-to-disperse" substrates which makes the particles sink and disperse in water without lumping. Therefore, an insoluble or slow-swelling thin coat on the surface of the substrate will enable "hard-to-disperse" gums, instant starches, clumpy ingredients, and blends thereof, to sink and disperse in the water before starting to swell, even under low shear.

The process includes:

**Step 100.** In step 100, the substrate (*e.g.,* gums, instant starches, powder ingredients or blends) to be agglomerated is fed into the agglomerating or granulating unit and sprayed with, preferably, approximately 0.1 to approximately 10% of the hydrocolloid, or combination of hydrocolloids, in single spray or multiple spray coats. The dose of the slow-swelling hydrocolloid coating may be modified -to achieve synergy between the coat and the substrate, wherein synergy is defined as increased viscosity, stability or process tolerance of the coated product in water or in the end application.

**Step 200.** In step 200, as applicable for the fluffy and light substrates, a finishing spray of: a wetting agent, such as, lecithin, glycerin, sugar alcohols; a weighting agent, such as, a solution of a calcium salt, magnesium salt, sodium salt, potassium salt; disintegrant, such as, cellulose powder, MCC, croscarmellose sodium, starch glycolate; or a mixture thereof; is applied to make the coated particles sink faster and disintegrate more readily.

**Step 300.** In step 300, the coated substrate is dried to its moisture specification in the same fluid bed unit or in a separate drying unit, such as, a tunnel dryer, drum dryer and other suitable drying equipment. If applicable, the sprayed material may be extruded and pelletized, or flaked first prior to drying.

**Step 400.** In step 400, the dried coated substrate is sifted and/or milled to the desired particle size distribution depending on the substrate.

The finished product produced using the coating and agglomeration/granulation technique as described in the two embodiments possess fast dispersion and hydration characteristics under low shear of 400 RPM mixing speed, as shown in Tables 1, 2, 3 and 4, as compared to the standard agglomerated and non-agglomerated substrates. The finished products using the present disclosure sink and disperse in water without lumping, and thus thicken much faster as soon as the water penetrates the surface coating. Figures 3 and 4 clearly illustrate the fast dispersion and hydration feature of the coated substrates as described in this disclosure. In many food applications where powder mixes are dissolved in water using a spoon, the usefulness of this technology will become self evident, more so when a stock or concentrated solution of the gum or hard-to-disperse substrates is prepared prior to adding a gum solution to the batch, as in many production scenarios.

**Table 1. Dispersion and hydration of super dispersible xanthan and CMC produced using the first embodiment with alginate-calcium hydrogel coat as compared to standard agglomerated and non-agglomerated substrate.**

| SUBSTRATE & TRIAL # | 1 | 3 | 5 | 10 | 15 | 30 | 120 | % Moisture |
|---|---|---|---|---|---|---|---|---|
| | (minutes) | (minutes) | (minutes) | (minutes) | (minutes) | (minutes) | (minutes) | |
| | cP | cP | cP | cP | cP | cP | cP | |
| **Xanthan** | | | | | | | | |
| Trial # 1 | 1793 | 1693 | 1707 | 1607 | 1546 | 1565 | 1518 | 11.4 |
| Trial #2 | 1481 | 1415 | 1335 | 1172 | 1147 | 1140 | 1177 | 14.5 |
| Trial #3 | 1310 | 1085 | 1075 | 1086 | 1093 | 1038 | 1087 | 13.7 |
| Trial #4 | 1413 | 1382 | 1312 | 1158 | 1088 | 1057 | 1065 | 10.5 |
| Trial #5 | 1298 | 1210 | 1102 | 1082 | 1067 | 995 | 1000 | 14.4 |
| Trial #6 | 965 | 1025 | 1053 | 1016 | 1008 | 1012 | 992 | 10.6 |
| Trial #7 | 1387 | 1230 | 1168 | 1113 | 1073 | 1068 | 1095 | 10.7 |
| ***Std Aggl Xanthan*** | 598 | 880 | 988 | 1062 | 1101 | 1128 | 1162 | 12.5 |
| ***Control Xanthan Raw*** | 31 | 97 | 224 | 320 | 591 | 905 | 1151 | 10.2 |
| | | | | | | | | |

| **High Viscosity CMC** | | | | | | | | |
|---|---|---|---|---|---|---|---|---|
| Trial #1 | 2193 | 3151 | 3802 | 3900 | 4013 | 3740 | 4107 | 15.1 |
| Trial #2 | 2730 | 3073 | 3327 | 3665 | 3648 | 3358 | 4608 | 13.4 |
| Trial #3 | 1272 | 2838 | 3310 | 3520 | 3643 | 3580 | 3995 | 14.5 |
| Trial #4 | 1381 | 2568 | 3048 | 2942 | 3002 | 2882 | 3200 | 14.8 |
| Trial #5 | 1712 | 3088 | 3420 | 3370 | 3740 | 3423 | 3235 | 14.1 |
| Trial #6 | 2308 | 3553 | 3893 | 4070 | 3883 | 3747 | 4080 | 13.3 |
| ***Std Aggl CMC*** | 881 | 1642 | 2139 | 2625 | 3235 | 3625 | 4685 | 14.0 |
| ***Control CMC Raw*** | 75 | 259 | 387 | 767 | 1208 | 2575 | 4370 | 10.0 |

**Table 2. Dispersion and hydration of super dispersible xanthan gum produced using alginate-calcium hydrogel coat and slow-swelling hydrocolloid coat of LBG and cook-up starch as described in the two embodiments of the present disclosure, compared to standard agglomerated and non-agglomerated substrates.**

| XANTHAN COATING & TRIAL # | 1 | 3 | 5 | 10 | 15 | 30 | 120 | % Moisture |
|---|---|---|---|---|---|---|---|---|
| | (minutes) | (minutes) | (minutes) | (minutes) | (minutes) | (minutes) | (minutes) | |
| | cP | cP | cP | cP | cP | cP | cP | |
| Alginate-Calcium 1 | 478 | 1545 | 1470 | 1495 | 1420 | 1580 | 1590 | 184 |
| Alginate-Calcium 2 | 558 | 1490 | 1450 | 1720 | 1580 | 1570 | 1580 | 68 |
| ***Average*** | 518 | 1518 | 1460 | 1608 | 1500 | 1575 | 1585 | |
| | | | | | | | | |
| Locust Bean Gum | 292 | 1255 | 1410 | 1390 | 1410 | 1325 | 1380 | 55 |
| | | | | | | | | |
| Cook-Up Starch 1 | 477 | 1396 | 1420 | 1340 | 1250 | 1365 | 1720 | 11.3 |
| Cook-Up Starch 2 | 1202 | 1370 | 1395 | 1450 | 1220 | 1350 | 1340 | 148 |
| Cook-Up Starch 3 | 1100 | 1500 | 1500 | 1583 | 1610 | 1642 | 1435 | 125 |
| ***Average*** | 926 | 1422 | 1438 | 1458 | 1360 | 1452 | 1498 | |
| | | | | | | | | |

| ***STD. AGGLOMERATED XANTHAN*** | | | | | | | | |
|---|---|---|---|---|---|---|---|---|
| Std. Agglomerated 1 | 580 | 602 | 724 | 724 | 840 | 932 | 1134 | 11.1 |
| Std. Agglomerated 2 | 598 | 880 | 988 | 1062 | 1101 | 1128 | 1162 | 12.5 |
| ***Average*** | 589 | 741 | 856 | 893 | 970.5 | 1030 | 1148 | |
| | | | | | | | | |

| ***XANTHAN RAW MATERlAL CONTROL*** | | | | | | | | |
|---|---|---|---|---|---|---|---|---|
| Xanthan Raw 1 | 40 | 130 | 176 | 364 | 542 | 768 | 956 | 10.2 |
| Xanthan Raw 2 | 22 | 63 | 272 | 276 | 640 | 1042 | 1345 | 102 |
| ***Average*** | 31 | 97 | 224 | 320 | 591 | 905 | 1151 | |

**Table 3. Dispersion and hydration of super dispersible CMC produced using alginate-calcium hydrogel coat and slow-swelling hydrocolloid coat of LBG and cook-up starch coats as described in the two embodiments of this disclosure, compared to standard agglomerated and non-agglomerated substrates.**

| CMC COATING & TRIAL# | 1 | 3 | 5 | 10 | *15* | 30 | 120 | % Moisture |
|---|---|---|---|---|---|---|---|---|
| | (minutes) | (minutes) | (minutes) | (minutes) | (minutes) | (minutes) | (minutes) | |
| | cP | cP | cP | cP | cP | cP | cP | |
| Alginate-Calcium 1 | 2790 | 4990 | 5340 | 5130 | 5420 | 5140 | 5780 | 143 |
| Alginate-Calcium 2 | 2920 | 4010 | 4220 | 4310 | 4870 | 4970 | 6050 | 14.3 |
| Alginate-Calcium 3 | 3610 | 4870 | 4960 | 5130 | 5250 | 4980 | 5730 | 14.3 |
| ***Average*** | 3107 | 4623 | 4840 | 4857 | 5180 | 5030 | 5853 | |
| | | | | | | | | |
| Locust Bean Gum 1 | 3170 | 4920 | 5420 | 5330 | 5040 | 4700 | 5370 | 72 |
| Locust Bean Gum 2 | 2860 | 3860 | 4760 | 5080 | 5120 | 4630 | 5320 | 7.2 |
| ***Average*** | 3015 | 4390 | 5090 | 5205 | 5080 | 4665 | 5345 | |
| | | | | | | | | |
| Cook Up Starch 1 | 1240 | 4440 | 5520 | 4640 | 5220 | 4500 | 5780 | *10.5* |
| Cook Up Starch 2 | 2325 | 4430 | 3480 | 5580 | 5600 | 5060 | 6020 | 7.2 |
| *Average* | 1783 | 4435 | 4500 | 5110 | 5410 | 4780 | 5900 | |

| ***STD. AGGLOMERATED CONTROL*** | | | | | | | | |
|---|---|---|---|---|---|---|---|---|
| Std. Agglomerated 1 | 1318 | 2760 | 3565 | 4025 | 4450 | 4880 | 5510 | 11.6 |
| Std, Agglomerated 2 | 443 | 524 | 713 | 1225 | 2020 | 3770 | 3860 | 15.4 |
| ***Average*** | 881 | 1642 | 2139 | 2625 | 3235 | 4325 | 4685 | |

| ***RAW MATERIAL CONTROL*** | | | | | | | | |
|---|---|---|---|---|---|---|---|---|
| CMC Raw 1 | 116 | 452 | 622 | 1052 | 1604 | 2850 | 4930 | 10.0 |
| CMC Raw 2 | 33.5 | 65 | 152 | 482 | 812 | 2300 | 3810 | 100 |
| ***Average*** | 75 | 259 | 387 | 767 | 1208 | 2575 | 4370 | |

**Table 4. Dispersion and hydration of super dispersible Gum Blend A produced using the cook- up starch coat as described in the second embodiment of this disclosure, compared to the non-agglomerated substrate.**

| GUM BLEND A COATING & TRIBAL# | 1 | 3 | 5 | 10 | 15 | 30 | 120 | % Moisture |
|---|---|---|---|---|---|---|---|---|
| | (minutes) | (minutes) | (minutes) | (minutes) | (minutes) | (minutes) | (minutes) | |
| | cP | cP | cP | cP | cP | cP | cP | |
| Cook Up Starch 1 | 463 | 978 | 1026 | 1165 | 1210 | 1260 | 1460 | 5.4 |
| Cook Up Starch 2 | 990 | 1184 | 1225 | 1250 | 1300 | 1410 | 1540 | 3.0 |
| ***Average*** | 727 | 1081 | 1126 | 1208 | 1255 | 1335 | 1500 | |

| ***CONTROL*** | | | | | | | | |
|---|---|---|---|---|---|---|---|---|
| Raw Material | 260 | 782 | 850 | 970 | 970 | 1020 | 1360 | |

The dispersion of the finished product in water was tested using spoon mixing in a beaker or cup. However, the above data were obtained using the test procedure for dispersion and hydration described below:
1. Weigh 396 g of water in a 600-mL beaker and 4 g of gum on a weigh boat.
2. Lower the blade of the lightnin' mixer 1 inch below the surface of the water in the beaker.
3. Begin mixing at 400 RPM and sprinkle in the gum in a span of 5 seconds and start timer.
4. Measure viscosity in an RV Brookfield viscometer at 20 RPM exactly at 1, 3, 5, 10, 15, 30 and 120 minutes. In order to read the viscosity at the specified time interval, remove the beaker from the mixer 20 seconds prior to measure time, place solution on the viscometer, turn it on and read viscosity exactly at the indicated time interval. Place solution back in the mixer after each viscosity measurement.
5. Observe for lumping.

Figure 5 shows the effect of a weighting agent, such as, calcium chloride on dispersion and hydration of a light, fluffy grade of xanthan gum. Calcium chloride, like other dense, water-soluble salts, aids the powder particles to sink and disperse in water more readily, thereby, improving dispersion and hydration of hard-to-disperse, fluffy xanthan gum when used in combination with a starch coat. Other fluffy, poorly dispersing materials will achieve rapid dispersion using the combination of the hydrocolloid coat and a weighting salt.

Gum polysaccharides are capable of showing unexpected synergy with the coating and the present invention includes a discovery of dramatic synergy between the various coatings listed in the two embodiments and xanthan gum. However, the scope of these synergies is not limited to xanthan alone or to the types of coating disclosed in this invention as other substrates and coatings will show synergy as well. The principle of uniformly coating, wetting and intermingling the coating polymers and gum polymers and then drying, using coat-agglomeration or other methods, such as, film casting or sheeting, slurring and drum drying, etc., can give the coated substrate improved functionality. The product features to be considered are the type of coating type, level of coating, and final moisture content.

Figures 6 and 7 show the synergy achieved between the coating and xanthan gum, for example, using a cook-up starch and 2 grades of commercial xanthan. This same synergy was also achieved using an alginate-calcium hydrogel coat and locust bean gum coat, and also will occur with other crosslinked hydrogel coats and slow swelling hydrocolloid coats, such as, guar, konjac, gellan, kappa-carrageenan and others.

The coating synergy was best seen with xanthan gum, which scientifically can be explained by xanthan's molecular structure and water binding property. Xanthan has an unusually low viscosity compared to its high molecular weight gum counterparts, such as, guar gum and konjac glucomannan. The reason is because of its unique structure - a linear glucose backbone with a trisaccharide substitution. Unlike guar gum, which is also a linear substituted polysaccharide, xanthan assumes a double helical conformation when it is hydrated in water. Inside the helices, water is tightly bound and viscosity is high, but between the helices or between polymer chains, the intermolecular hydrogen bonds are weaker and viscosity is low. Therefore, compared to guar gum and konjac, the measured viscosity for xanthan is low because these inter-polymer bonds are the ones broken during the shear test. The highly pseudoplastic flow of xanthan is attributed to these low and high viscosity zones, which is also responsible for xanthan's superior suspending property. It seems that the coating, which are linear hydrocolloids, are able to induce or form micelles with the xanthan gum strengthening the inter-polymer chain association and causing a dramatic increase in viscosity. Standard xanthan grade has a 1% viscosity of about 1200-1600 cP and the high viscosity xanthan grade has about 2400-3300 cP. The synergy between the xanthan and the coating boosted the viscosity of these xanthan grades around ten-fold.

Although the disclosure has been described and illustrated with a certain degree of particularity, it is understood that the disclosure has been made only by way of example, and that numerous changes in the conditions and order of steps can be resorted to by those skilled in the art without departing from the spirit and scope of the disclosure.

## Claims

1. A process of surface coating a substrate comprising the steps of:
a) placing a low-dispersible substrate in a mixing container;
b) spraying the low-dispersible substrate with a crosslinkable anionic hydrocolloid polymer;
c) spraying the anionic-coated substrate with a cationic salt to crosslink the anionic polymer coat with a divalent ion to produce a crosslinked hydrogel coat over the substrate;
d) spraying the hydrogel-coated substrate with at least one finishing spray to obtain a coated product, wherein the at least one finishing spray selected from the group consisting of a wetting agent, a weighting agent, a disintegrant and a mixture thereof; and
e) drying the coated product to obtain a super dispersible gum.

2. The process of surface coating a substrate of Claim 1, further comprising step:
f) processing the coated product to the appropriate mesh quality with a process selected from the group consisting of sifting and milling.

3. The process of surface coating a substrate of Claim 1, where the mixing container is selected from the group consisting of a fluidized-bed agglomerator, a blender, a mixer and a tumbler.

4. The process of surface coating a substrate of Claim 1, where steps b and c are:
b) spraying the low-dispersible substrate with a divalent ion of a cationic salt
c) spraying the low-dispersible substrate with a crosslinkable anionic hydrocolloid polymer, allowing the anionic hydrocolloid to crosslink, and producing a hydrogel-coated substrate.

5. The process of surface coating a substrate of Claim 1, further comprising:
step i) processing the hydrogel-coated substrate with a process selected from the group consisting of extruding, pelleting, flaking and granulating,
between steps d) and e).

6. The process of surface coating a substrate of Claim 1, wherein the anionic hydrocolloid is selected from the group consisting of alginate and other sugar-acid polymers.

7. The process of surface coating a substrate of Claim 1, where the anionic hydrocolloid in step b) is sprayed at a gum concentration of from approximately 0.1% to approximately 10% by weight in water.

8. The process of surface coating a substrate of Claim 1, where the divalent salt is selected from the group of calcium and magnesium.

9. The process of surface coating a substrate of Claim 1, where the divalent salt in step c) is sprayed at a concentration of from approximately 0.1% to approximately 10% by weight in water.

10. The process of surface coating a substrate of Claim 1, wherein the crosslinked hydrogel coat achieves a synergy with the substrate using a method selected from the group consisting of coat-agglomeration, film casting, film sheeting, slurring, and drum drying, wherein the synergy is selected from the group consisting of at least one of an increased viscosity, increased stability, increased process tolerance, and increased dispersiblity; of the coated product in water or end application.

11. The process of surface coating a substrate of Claim 1,
wherein the substrate is a fluffy and light substrate, the finishing spray in step d) is a solution with a concentration of approximately from 0.1% to 10% by weight in water;
wherein the wetting agent is selected from the group consisting of at least one of lecithin, glycerin, and sugar alcohol;
wherein the weighting agent is selected from the group consisting of at least one of calcium salt, magnesium salt, sodium salt, and potassium salt; and
wherein the disintegrant is selected from the group consisting of at least one of cellulose powder, MCC, croscarmellose sodium, starch glycolate;
to make the coated product more readily sink, wet and disintegrate.

12. The process of surface coating a substrate of Claim 1, wherein the finishing spray is used in conjunction with the hydrocolloid coat in step b).

13. The process of surface coating a substrate of Claim 1, wherein a location of drying the coated product in step e) is selected from the group consisting of the mixing container and a drying unit.

14. The process of surface coating a substrate of Claim 1, where the drying unit is selected from the group consisting of a tunnel dryer, a drum dryer and other suitable drying equipment.

15. A super dispersible composition produced according to the process of Claim 1

16. A process of surface coating a substrate comprising the steps of:
a) placing a low-dispersible substrate in a mixing container;
b) spraying the low-dispersible substrate with a hydrocolloid to produce a coated substrate, wherein the hydrocolloid is selected from the group consisting of a cold-water insoluble hydrocolloid and a slow-swelling hydrocolloid;
d) spraying the hydrocolloid coated substrate with at least one finishing spray to obtain a coated product, wherein the at least one finishing spray selected from the group consisting of a wetting agent, a weighting agent, a disintegrant and a mixture thereof;
e) drying the coated product to obtain a super dispersible gum.

17. The process of surface coating a substrate of Claim 16, further comprising step:
f) processing the coated product to the appropriate mesh quality with a process selected from the group consisting of sifting and milling.

18. The process of surface coating a substrate of Claim 16, where the mixing container is selected from the group consisting of a fluidized-bed agglomerator, a blender, a mixer and a tumbler.

19. The process of surface coating a substrate of Claim 16, further comprising:
step i) processing the hydrogel-coated substrate with a process selected from the group consisting of extruding, pelleting, flaking and granulating,
between steps d) and e).

20. The process of surface coating a substrate of Claim 16, wherein the hydrocolloid coat is selected from the group consisting of locust bean gum, agar, kappa carrageenan, gellan, cook-up starch, guar gum, tara gum, and combinations thereof.

21. The process of surface coating a substrate of Claim 16, wherein the hydrocolloid is in a solution at a concentration from approximately 0.1 % to approximately 10%.

22. The process of surface coating a substrate of Claim 16, wherein the spraying in step b) is multiple sprayings.

23. The process of surface coating a substrate of Claim 16, wherein the hydrocolloid coat achieves a synergy with the substrate using a method selected from the group consisting of coat-agglomeration, film casting, film sheeting, slurring, and drum drying, wherein the synergy is selected from the group consisting of at least one of an increased viscosity, increased stability, increased process tolerance, and increased dispersiblity; of the coated product in water or end application.

24. The process of surface coating a substrate of Claim 16,
wherein the substrate is a fluffy and light substrate, the finishing spray in step d) is a solution with a concentration of approximately from 0.1% to 10% by weight in water;
wherein the wetting agent is selected from the group consisting of at least one of lecithin, glycerin, and sugar alcohol;
wherein the weighting agent is selected from the group consisting of at least one of calcium salt, magnesium salt, sodium salt, and potassium salt; and
wherein the disintegrant is selected from the group consisting of at least one of cellulose powder, MCC, croscarmellose sodium, starch glycolate;
to make the hydrocolloid coated product more readily sink, wet and disintegrate.

25. The process of surface coating a substrate of Claim 16, wherein the finishing spray is used in conjunction with the hydrocolloid coat in step b).

26. The process of surface coating a substrate of Claim 16, wherein a location of drying the coated product in step e) is selected from the group consisting of the mixing container and an agglomerating container.

27. The process of surface coating a substrate of Claim 16, where the coated product in step d) may be transferred to a separate drying unit before step e).

28. The process of surface coating a substrate of Claim 16, where the drying unit is selected from the group consisting of a tunnel dryer, a drum dryer and other suitable drying equipment.

29. A super dispersible composition produced according to the process of Claim 16.

## Patentansprüche

1. Verfahren zur Oberflächenbeschichtung eines Substrats, umfassend die Schritte:
a) Platzieren eines niedrig dispergierbaren Substrats in einen Mischcontainer;
b) Besprühen des niedrig dispergierbaren Substrats mit einem vernetzbaren anionischen Hydrokolloid-Polymer;
c) Besprühen des anionisch-beschichteten Substrats mit einem kationischen Salz, um die anionische Polymerbeschichtung mit einem zweiwertigen Ion zu vernetzen, um eine vernetzte Hydrogel-Beschichtung über dem Substrat herzustellen;
d) Besprühen des Hydrogel-beschichteten Substrats mit mindestens einem abschließenden Sprühmittel, um ein beschichtetes Produkt zu erhalten, wobei das mindestens eine abschließende Sprühmittel ausgewählt ist aus der Gruppe bestehend aus einem Netzmittel, einem Beschwerungsmittel, einem Sprengmittel und einer Mischung davon; und
e) Trocknen des beschichteten Produkts, um einen leicht dispergierbaren Gummi zu erhalten.

2. Verfahren zur Oberflächenbeschichtung eines Substrats nach Anspruch 1, weiter umfassend den Schritt:
f) Verarbeiten des beschichteten Produkts zur geeigneten Maschenqualität mit einem Verfahren ausgewählt aus der Gruppe bestehend aus Sieben und Mahlen.

3. Verfahren zur Oberflächenbeschichtung eines Substrats nach Anspruch 1, wobei der Mischcontainer ausgewählt ist aus der Gruppe bestehend aus einem Fließbett-Agglomerator, einem Vermischer, einem Mischer und einem Trommelmischer.

4. Verfahren zur Oberflächenbeschichtung eines Substrats nach Anspruch 1, wobei die Schritte b und c sind:
b) Besprühen des niedrig dispergierbaren Substrats mit einem zweiwertigen Ion eines kationischen Salzes
c) Besprühen des niedrig dispergierbaren Substrats mit einem vernetzbaren anionischen Hydrokolloid-Polymer, wobei das anionische Hydrokolloid vernetzen kann, und Herstellen eines Hydrogel-beschichteten Substrats.

5. Verfahren zur Oberflächenbeschichtung eines Substrats nach Anspruch 1, weiter umfassend:
Schritt i) Verarbeiten des Hydrogel-beschichteten Substrats mit einem Verfahren ausgewählt aus der Gruppe bestehend aus Extrudieren, Pelletieren, Flockieren und Granulieren, zwischen den Schritten d) und e).

6. Verfahren zur Oberflächenbeschichtung eines Substrats nach Anspruch 1, wobei das anionische Hydrokolloid ausgewählt ist aus der Gruppe bestehend aus Alginat und anderen Zucker-Säure-Polymeren.

7. Verfahren zur Oberflächenbeschichtung eines Substrats nach Anspruch 1, wobei das anionische Hydrokolloid in Schritt b) bei einer Gummi-Konzentration von ungefähr 0,1 Gewichts-% bis ungefähr 10 Gewichts-% in Wasser gesprüht wird.

8. Verfahren zur Oberflächenbeschichtung eines Substrats nach Anspruch 1, wobei das zweiwertige Salz ausgewählt ist aus der Gruppe bestehend aus Calcium und Magnesium.

9. Verfahren zur Oberflächenbeschichtung eines Substrats nach Anspruch 1, wobei das zweiwertige Salz in Schritt c) bei einer Konzentration von ungefähr 0,1 Gewichts-% bis ungefähr 10 Gewichts-% in Wasser gesprüht wird.

10. Verfahren zur Oberflächenbeschichtung eines Substrats nach Anspruch 1, wobei die vernetzte Hydrogel-Beschichtung eine Synergie mit dem Substrat erreicht unter Verwendung eines Verfahrens ausgewählt aus der Gruppe bestehend aus Beschichtungs-Agglomeration, Filmgießen, Filmziehen, Aufschlämmen und Walzentrocknung, wobei die Synergie ausgewählt ist aus der Gruppe bestehend aus mindestens einem von einer erhöhten Viskosität, erhöhten Stabilität, erhöhten Fertigungstoleranz und erhöhten Dispergierbarkeit des beschichteten Produkts in Wasser oder der Endanwendung.

11. Verfahren zur Oberflächenbeschichtung eines Substrats nach Anspruch 1,
wobei das Substrat ein lockeres und leichtes Substrat ist, das abschließende Sprühmittel in Schritt d) eine Lösung mit einer Konzentration von ungefähr 0,1 Gewichts-% bis 10 Gewichts-% in Wasser ist,
wobei das Netzmittel ausgewählt ist aus der Gruppe bestehend aus mindestens einem von Lecithin, Glycerin und Zuckeralkohol:
wobei das Beschwerungsmittel ausgewählt ist aus der Gruppe bestehend aus mindestens einem von Calciumsalz, Magnesiumsalz, Natriumsalz und Kaliumsalz; und
wobei das Sprengmittel ausgewählt ist aus der Gruppe bestehend aus mindestens einem von Cellulosepulver, MCC, Croscarmellose-Natrium, Stärkeglycolat;
um das beschichtete Produkt leichter absinkbar, nass und auflösbar zu machen.

12. Verfahren zur Oberflächenbeschichtung eines Substrats nach Anspruch 1, wobei das abschließende Sprühmittel in Verbindung mit der Hydrokolloid-Beschichtung in Schritt b) verwendet wird.

13. Verfahren zur Oberflächenbeschichtung eines Substrats nach Anspruch 1, wobei eine Stelle zum Trocknen des beschichteten Produkts in Schritt e) ausgewählt ist aus der Gruppe bestehend aus dem Mischcontainer und einer Trocknungseinheit.

14. Verfahren zur Oberflächenbeschichtung eines Substrats nach Anspruch 1, wobei die Trocknungseinheit ausgewählt ist aus der Gruppe bestehend aus einem Tunneltrockner, einem Walzentrockner und einem anderen geeigneten Trocknungsequipment.

15. Leicht dispergierbare Zusammensetzung, hergestellt gemäß des Verfahrens nach Anspruch 1.

16. Verfahren zur Oberflächenbeschichtung eines Substrats umfassend die Schritte:
a) Platzieren eines niedrig dispergierbaren Substrats in einen Mischcontainer;
b) Besprühen des niedrig dispergierbaren Substrats mit einem Hydrokolloid, um ein beschichtetes Substrat herzustellen, wobei das Hydrokolloid ausgewählt ist aus der Gruppe bestehend aus einem in Kaltwasser unlöslichen Hydrokolloid und einem langsam anschwellenden Hydrokolloid;
d) Besprühen des Hydrokolloid-beschichteten Substrats mit mindestens einem abschließenden Sprühmittel, um ein beschichtetes Produkt zu erhalten, wobei das mindestens eine abschließende Sprühmittel ausgewählt ist aus der Gruppe bestehend aus einem Netzmittel, einem Beschwerungsmittel, einem Sprengmittel und einer Mischung davon;
e) Trocknen des beschichteten Produkts, um einen leicht dispergierbaren Gummi zu erhalten.

17. Verfahren zur Oberflächenbeschichtung eines Substrats nach Anspruch 16, weiter umfassend den Schritt:
f) Verarbeiten des beschichteten Produkts zur geeigneten Maschenqualität mit einem Verfahren ausgewählt aus der Gruppe bestehend aus Sieben und Mahlen.

18. Verfahren zur Oberflächenbeschichtung eines Substrats nach Anspruch 16, wobei der Mischcontainer ausgewählt ist aus der Gruppe bestehend aus einem Fließbett-Agglomerator, einem Vermischer, einem Mischer und einem Trommelmischer.

19. Verfahren zur Oberflächenbeschichtung eines Substrats nach Anspruch 16, weiter umfassend:
Schritt i) Verarbeiten des Hydrogel-beschichteten Substrats mit einem Verfahren ausgewählt aus der Gruppe bestehend aus Extrudieren, Pelletieren, Flockieren und Granulieren, zwischen den Schritten d) und e).

20. Verfahren zur Oberflächenbeschichtung eines Substrats nach Anspruch 16, wobei die Hydrokolloid-Beschichtung ausgewählt ist aus der Gruppe bestehend aus Johannisbrotkernmehl, Agar, kappa-Carrageen, Gellan, aufgekochter Stärke, Guargummi, Taragummi und Kombinationen davon.

21. Verfahren zur Oberflächenbeschichtung eines Substrats nach Anspruch 16, wobei das Hydrokolloid in einer Lösung bei einer Konzentration von ungefähr 0,1 % bis ungefähr 10 % vorliegt.

22. Verfahren zur Oberflächenbeschichtung eines Substrats nach Anspruch 16, wobei das Besprühen in Schritt b) mehrere Sprühvorgänge ist.

23. Verfahren zur Oberflächenbeschichtung eines Substrats nach Anspruch 16, wobei die Hydrokolloid-Beschichtung eine Synergie mit dem Substrat erreicht unter Verwendung eines Verfahrens ausgewählt aus der Gruppe bestehend aus Beschichtungs-Agglomeration, Filmgießen, Filmziehen, Aufschlämmen und Walzentrocknung, wobei die Synergie ausgewählt ist aus der Gruppe bestehend aus mindestens einem von einer erhöhten Viskosität, erhöhten Stabilität, erhöhten Fertigungstoleranz und erhöhten Dispergierbarkeit des beschichteten Produkts in Wasser oder der Endanwendung.

24. Verfahren zur Oberflächenbeschichtung eines Substrats nach Anspruch 16, wobei das Substrat ein lockeres und leichtes Substrat ist, das abschließende Sprühmittel in Schritt d) eine Lösung mit einer Konzentration von ungefähr 0,1 Gewichts-% bis 10 Gewichts-% in Wasser ist,
wobei das Netzmittel ausgewählt ist aus der Gruppe bestehend aus mindestens einem von Lecithin, Glycerin und Zuckeralkohol:
wobei das Beschwerungsmittel ausgewählt ist aus der Gruppe bestehend aus mindestens einem von Calciumsalz, Magnesiumsalz, Natriumsalz und Kaliumsalz; und
wobei das Sprengmittel ausgewählt ist aus der Gruppe bestehend aus mindestens einem von Cellulosepulver, MCC, Croscarmellose-Natrium, Stärkeglycolat;
um das beschichtete Produkt leichter absinkbar, nass und auflösbar zu machen.

25. Verfahren zur Oberflächenbeschichtung eines Substrats nach Anspruch 16, wobei das abschließende Sprühmittel in Verbindung mit der Hydrokolloid-Beschichtung in Schritt b) verwendet wird.

26. Verfahren zur Oberflächenbeschichtung eines Substrats nach Anspruch 16, wobei eine Stelle zum Trocknen des beschichteten Produkts in Schritt e) ausgewählt ist aus der Gruppe bestehend aus dem Mischcontainer und einem Agglomerations-Container.

27. Verfahren zur Oberflächenbeschichtung eines Substrats nach Anspruch 16, wobei das beschichtete Produkt in Schritt d) auf eine separateTrocknungseinheit vor Schritt e) übertragen werden kann.

28. Verfahren zur Oberflächenbeschichtung eines Substrats nach Anspruch 16, wobei die Trocknungseinheit ausgewählt ist aus der Gruppe bestehend aus einem Tunneltrockner, Walzentrockner und einem anderen geeigneten Trocknungsequipment.

29. Leicht dispergierbare Zusammensetzung, hergestellt gemäß des Verfahrens nach Anspruch 16.

## Revendications

1. Procédé de revêtement en surface d'un substrat comprenant les étapes consistant :
a) à placer un substrat faiblement dispersible dans un récipient de mélange ;
b) à pulvériser le substrat faiblement dispersible avec un polymère d'hydrocolloïde anionique réticulable ;
c) à pulvériser le substrat anionique-revêtu avec un sel cationique pour réticuler le revêtement polymère anionique avec un ion divalent pour produire un revêtement d'hydrogel réticulé sur le substrat ;
d) à pulvériser le substrat hydrogel-revêtu avec au moins une pulvérisation de finition pour obtenir un produit revêtu, dans lequel la au moins une pulvérisation de finition est choisie dans le groupe constitué d'un agent mouillant, d'un agent alourdissant, d'un désintégrant et d'un mélange de ceux-ci ;
e) à sécher le produit revêtu pour obtenir une gomme super dispersible.

2. Procédé de revêtement en surface d'un substrat selon la revendication 1, comprenant de plus l'étape consistant :
f) à traiter le produit revêtu à la qualité de maille appropriée avec un procédé choisi dans le groupe constitué d'un tamisage et d'un broyage.

3. Procédé de revêtement en surface d'un substrat selon la revendication 1, dans lequel le récipient de mélange est choisi dans le groupe constitué d'un agglomérateur à lit fluidisé, d'un mélangeur, d'un malaxeur et d'un tambour.

4. Procédé de revêtement en surface d'un substrat selon la revendication 1, dans lequel les étapes b) et c) consistent :
b) à pulvériser le substrat faiblement dispersible avec un ion divalent d'un sel cationique
c) à pulvériser le substrat faiblement dispersible avec un polymère d'hydrocolloïde anionique réticulable, à laisser l'hydrocolloïde anionique réticulé, et à produire un substrat hydrogel-revêtu.

5. Procédé de revêtement en surface d'un substrat selon la revendication 1, comprenant de plus l'étape consistant :
i) à traiter le substrat hydrogel-revêtu avec un procédé choisi dans le groupe constitué d'une extrusion, d'une transformation en boulettes, d'une transformation en flocons et d'une granulation,
entre les étapes d) et e).

6. Procédé de revêtement en surface d'un substrat selon la revendication 1, dans lequel l'hydrocolloïde anionique est choisi dans le groupe constitué d'un alginate et d'autres polymères de sucre-acide.

7. Procédé de revêtement en surface d'un substrat selon la revendication 1, dans lequel l'hydrocolloïde anionique dans l'étape b) est pulvérisé à une concentration en gomme d'approximativement 0,1 % à approximativement 10 % en masse dans de l'eau.

8. Procédé de revêtement en surface d'un substrat selon la revendication 1, dans lequel le sel divalent est choisi dans le groupe constitué du calcium et du magnésium.

9. Procédé de revêtement en surface d'un substrat selon la revendication 1, dans lequel le sel divalent dans l'étape c) est pulvérisé à une concentration d'approximativement 0,1 % à approximativement 10 % en masse dans de l'eau.

10. Procédé de revêtement en surface d'un substrat selon la revendication 1, dans lequel le revêtement d'hydrogel réticulé réalise une synergie avec le substrat en utilisant un procédé choisi dans le groupe constitué d'un revêtement-agglomération, d'une coulée de film, d'une feuille de film, d'une mise en suspension et d'un séchage en tambour, dans lequel la synergie est choisie dans le groupe constitué d'au moins une parmi une viscosité plus élevée, une stabilité plus élevée, une tolérance plus élevée au procédé et une dispersibilité plus élevée ; du produit revêtu dans de l'eau ou de l'application finale.

11. Procédé de revêtement en surface d'un substrat selon la revendication 1, dans lequel le substrat est un substrat pelucheux et léger, la pulvérisation de finition dans l'étape d) est une solution avec une concentration d'approximativement 0,1 % à 10 % en masse dans de l'eau ;
dans lequel l'agent mouillant est choisi dans le groupe constitué d'au moins un parmi la lécithine, la glycérine, et un alcool de sucre ;
dans lequel l'agent alourdissant est choisi dans le groupe constitué d'au moins un parmi un sel de calcium, un sel de magnésium, un sel de sodium, et un sel de potassium ; et
dans lequel le désintégrant est choisi dans le groupe constitué d'au moins un parmi la poudre de cellulose, la MCC, le croscarmellose sodique, un glycolate d'amidon ;
pour faire en sorte que le produit revêtu coule, se mouille et se désintègre plus facilement.

12. Procédé de revêtement en surface d'un substrat selon la revendication 1, dans lequel la pulvérisation de finition est utilisée en association avec le revêtement d'hydrocolloïde dans l'étape b).

13. Procédé de revêtement en surface d'un substrat selon la revendication 1, dans lequel un endroit de séchage du produit revêtu dans l'étape e) est choisi dans le groupe constitué du récipient de mélange et d'une unité de séchage.

14. Procédé de revêtement en surface d'un substrat selon la revendication 1, dans lequel l'unité de séchage est choisie dans le groupe constitué d'un sécheur à tunnel, d'un sécheur à tambour et d'un autre équipement de séchage approprié.

15. Composition super dispersible produite selon le procédé selon la revendication 1.

16. Procédé de revêtement en surface d'un substrat comprenant les étapes consistant :
a) à placer un substrat faiblement dispersible dans un récipient de mélange ;
b) à pulvériser le substrat faiblement dispersible avec un hydrocolloïde pour produire un substrat revêtu, dans lequel l'hydrocolloïde est choisi dans le groupe constitué d'un hydrocolloïde insoluble dans l'eau froide et d'un hydrocolloïde gonflant lentement ;
d) à pulvériser le substrat revêtu d'hydrocolloïde avec au moins une pulvérisation de finition pour obtenir un produit revêtu, dans lequel la au moins une pulvérisation de finition est choisie dans le groupe constitué d'un agent mouillant, d'un agent alourdissant, d'un désintégrant et d'un mélange de ceux-ci ;
e) à sécher le produit revêtu pour obtenir une gomme super dispersible.

17. Procédé de revêtement en surface d'un substrat selon la revendication 16, comprenant de plus l'étape consistant :
f) à traiter le produit revêtu à la qualité de maille appropriée avec un procédé choisi dans le groupe constitué d'un tamisage et d'un broyage.

18. Procédé de revêtement en surface d'un substrat selon la revendication 16, dans lequel le récipient de mélange est choisi dans le groupe constitué d'un agglomérateur à lit fluidisé, d'un mélangeur, d'un malaxeur et d'un tambour.

19. Procédé de revêtement en surface d'un substrat selon la revendication 16, comprenant de plus l'étape consistant :
i) à traiter le substrat hydrogel-revêtu avec un procédé choisi dans le groupe constitué d'une extrusion, d'une transformation en boulettes, d'une transformation en flocons et d'une granulation,
entre les étapes d) et e).

20. Procédé de revêtement en surface d'un substrat selon la revendication 16, dans lequel le revêtement d'hydrocolloïde est choisi dans le groupe constitué de gomme de caroube, d'agar, de carrageenan kappa, de gomme gellane, d'amidon modifié par cuisson, de gomme guar, de gomme tara, et de combinaisons de ceux-ci.

21. Procédé de revêtement en surface d'un substrat selon la revendication 16, dans lequel l'hydrocolloïde est dans une solution à une concentration d'approximativement 0,1 % à approximativement 10 %.

22. Procédé de revêtement en surface d'un substrat selon la revendication 16, dans lequel la pulvérisation dans l'étape b) est constituée de pulvérisations multiples.

23. Procédé de revêtement en surface d'un substrat selon la revendication 16, dans lequel le revêtement d'hydrocolloïde réalise une synergie avec le substrat en utilisant un procédé choisi dans le groupe constitué d'un revêtement-agglomération, d'une coulée de film, d'une feuille de film, d'une mise en suspension, et d'un séchage en tambour, dans lequel la synergie est choisie dans le groupe constitué d'au moins une parmi une viscosité plus élevée, une stabilité plus élevée, une tolérance plus élevée au procédé, et une dispersibilité plus élevée ; du produit revêtu dans de l'eau ou de l'application finale.

24. Procédé de revêtement en surface d'un substrat selon la revendication 16,
dans lequel le substrat est un substrat pelucheux et léger, la pulvérisation de finition dans l'étape d) est une solution avec une concentration d'approximativement 0,1 % à 10 % en masse dans de l'eau ;
dans lequel l'agent mouillant est choisi dans le groupe constitué d'au moins un parmi la lécithine, la glycérine, et un alcool de sucre ;
dans lequel l'agent alourdissant est choisi dans le groupe constitué d'au moins un parmi un sel de calcium, un sel de magnésium, un sel de sodium, et un sel de potassium ; et
dans lequel le désintégrant est choisi dans le groupe constitué d'au moins un parmi la poudre de cellulose, la MCC, le croscarmellose sodique, un glycolate d'amidon ;
pour faire en sorte que le produit revêtu d'hydrocolloïde coule, se mouille et se désintègre plus facilement.

25. Procédé de revêtement en surface d'un substrat selon la revendication 16, dans lequel la pulvérisation de finition est utilisée en association avec le revêtement d'hydrocolloïde dans l'étape b).

26. Procédé de revêtement en surface d'un substrat selon la revendication 16, dans lequel un endroit de séchage du produit revêtu dans l'étape e) est choisi dans le groupe constitué du récipient de mélange et d'un récipient d'agglomération.

27. Procédé de revêtement en surface d'un substrat selon la revendication 16, dans lequel le produit revêtu dans l'étape d) peut être transféré dans une unité de séchage séparée avant l'étape e).

28. Procédé de revêtement en surface d'un substrat selon la revendication 16, dans lequel l'unité de séchage est choisie dans le groupe constitué d'un sécheur à tunnel, d'un sécheur à tambour et d'un autre équipement de séchage approprié.

29. Composition super dispersible produite selon le procédé selon la revendication 16.
